(19) Europäisches Patentamt
European Patent Office
Office européen des brevets

(11) **EP 3 106 850 A1**

(12) **EUROPEAN PATENT APPLICATION**

(43) Date of publication:
**21.12.2016   Bulletin 2016/51**

(51) Int Cl.:
***G01K 11/32*** *(2006.01)*      ***G01K 1/14*** *(2006.01)*

(21) Application number: **16178584.5**

(22) Date of filing: **11.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(62) Document number(s) of the earlier application(s) in accordance with Art. 76 EPC:
**12889871.5 / 2 933 664**

(71) Applicant: **FUJITSU LIMITED**
**211-8588 Kanagawa (JP)**

(72) Inventors:
• **Masubuchi, Hitomi**
  **Kanagawa, 220-8711 (JP)**

• **Kanemoto, Daisaku**
  **Kanagawa, 210-8571 (JP)**

(74) Representative: **Hoffmann Eitle**
**Patent- und Rechtsanwälte PartmbB**
**Arabellastraße 30**
**81925 München (DE)**

Remarks:
This application was filed on 08-07-2016 as a divisional application to the application mentioned under INID code 62.

(54) **TEMPERATURE MEASUREMENT SYSTEM AND TEMPERATURE MEASUREMENT METHOD**

(57)      [Object]
To reduce the load on a worker in an optical fiber wiring sheet, a temperature measurement system, and a temperature measurement method.
[Solving Means]
An optical fiber wiring sheet 1 includes a sheet 2 having air permeability and an optical fiber 3 laid on a surface of the sheet 2. The optical fiber 3 has an optical input terminal 11 provided at one end portion thereof and an optical output terminal 12 provided at other end portion thereof.

【FIG. 11】

EP 3 106 850 A1

**Description**

TECHNICAL FIELD

The embodiments discussed herein are related to an optical fiber wiring sheet, a temperature measurement system, and a temperature measurement method.

BACKGROUND ART

In a data center in which electronic devices such as servers are placed, the electronic devices are overcooled or insufficiently cooled due to excessive or deficient air conditioning in some cases. To prevent this, it is helpful to measure the temperature of the electronic device in operation and reflect the result of the measurement in air conditioning.
As the technique for measuring the temperature of the electronic device, a temperature measurement method using an optical fiber is known. In this method, an optical fiber is laid in a predetermined pattern on an electronic device in a data center, and temperatures at desired positions on the laid pattern of the optical fiber are measured based on backscattered light outputted from the optical fiber.
The temperature measurement method using the optical fiber can accurately measure temperature and has an advantage in that the temperatures can be measured at desired positions on the optical fiber.
However, this method requires a worker to manually lay an optical fiber. Therefore, this method has room for improvement in terms of a reduction in the load on a worker.

PRIOR ART DOCUMENTS

PATENT DOCUMENTS

Patent Document 1: Japanese Laid-open Patent Publication No. 2009-265007

SUMMARY OF THE INVENTION

PROBLEM TO BE SOLVED BY THE INVENTION

In one aspect, an object of the present invention is to reduce the load on a worker in an optical fiber wiring sheet, a temperature measurement system, and a temperature measurement method.

MEANS FOR SOLVING THE PROBLEM

According to one aspect discussed herein, there is provided an optical fiber wiring sheet including: a sheet having air permeability; and an optical fiber laid on a surface of the sheet, the optical fiber having two ends, one of which is provided with an optical input terminal, and the other of which is provided with an optical output terminal.
Moreover, according to another aspect discussed herein, there is provided a temperature measurement system including: a casing in which an electronic device is housed; a sheet provided on a surface of the casing; an optical fiber laid on a surface of the sheet, the optical fiber having two ends, one of which is provided with an optical input terminal and the other of which is provided with an optical output terminal; and a temperature measurement device which measures a temperature distribution along a length direction of the optical fiber by supplying an optical signal to the optical input terminal and receiving the optical signal backscattered in the optical fiber.
Furthermore, according to still another aspect discussed herein, there is provided a temperature measurement method including: fixing a sheet on a surface of a casing in which an electronic device is housed, where an optical fiber including an optical input terminal and an optical output terminal being laid on the sheet; and measuring a temperature distribution along a length direction of the optical fiber by supplying an optical signal to the optical input terminal and receiving the optical signal backscattered in the optical fiber.
Moreover, according to yet another aspect discussed herein, there is provided an optical fiber wiring sheet including: a sheet-shaped mesh member; and an optical fiber disposed in a predetermined wiring pattern on the sheet-shaped mesh member and attached to the sheet-shaped mesh member, wherein the optical fiber comprises a lead portion led out to an outside of the sheet-shaped mesh member, and the lead portion comprises an optical fiber portion through which an optical signal is inputted to the optical fiber disposed on the sheet-shaped mesh member, and an optical fiber portion through which the optical signal is outputted from the optical fiber disposed on the sheet-shaped mesh member.
Further, according to further aspect discussed herein, there is provided a temperature measurement method including: attaching a sheet-shaped mesh member to an inside of a casing of a device including a heat generating body, where an optical fiber is disposed on and attached to the sheet-shaped mesh member in a predetermined wiring pattern; and measuring a temperature distribution about any one of the device and the casing using the attached optical fiber.

Furthermore, according to still further aspect discussed herein, there is provided a temperature measurement method including: attaching a sheet-shaped mesh member to any one of an intake side and an exhaust side of a casing of a device including a heat generating body, where an optical fiber is disposed on the sheet-shaped mesh member in a predetermined wiring pattern; and measuring a temperature distribution about any one of the device and the casing using the disposed optical fiber.

Moreover, according to yet further aspect discussed herein, there is provided a temperature measurement method including: attaching a sheet-shaped mesh member to any one of an intake side and an exhaust side of a casing of a device including a heat generating body, where an optical fiber is disposed on the sheet-shaped mesh member in a predetermined wiring pattern; leading the optical fiber disposed on the attached sheet-shaped mesh member to an outside of the sheet-shaped mesh member, and arranging the optical fiber led to the outside in a predetermined shape; and measuring a temperature distribution about either the device or the casing, and about a position at which the optical fiber led to the outside and having the predetermined shape, by using the disposed optical fiber.

EFFECTS OF THE INVENTION

In one embodiment, since an optical fiber is laid on a sheet in advance, the load on a worker can be reduced.

BRIEF DESCRIPTION OF THE DRAWINGS

[Fig. 1] Fig. 1 is a plan view of an optical fiber wiring sheet according to the present embodiment.
[Fig. 2] Fig. 2 is an enlarged plan view of a tube used in the present embodiment and its neighborhoods.
[Fig. 3] Fig. 3 is an enlarged plan view of a hook used in the present embodiment and its neighborhoods.
[Fig. 4] Fig. 4 is a diagram illustrating a temperature measurement device used in the present embodiment.
[Fig. 5] Fig. 5 is a view illustrating a spectrum of backscattered light produced in the optical fiber.
[Fig. 6] Fig. 6 is a view illustrating one example of a time-series distribution of the intensity of Raman scattered light produced in the optical fiber.
[Fig. 7] Fig. 7 is a view illustrating a result of calculating the ratio $I_1/I_2$ for each time point based on the time-series distribution of the intensity of Raman scattered light of Fig. 6, converting the horizontal axis (time) of Fig. 6 to distance, and converting the vertical axis (signal intensity) of Fig. 6 to temperature.
[Fig. 8] Fig. 8 is a perspective view of a server rack subject to temperature measurement in the present embodiment.
[Fig. 9] Fig. 9 is a schematic diagram of a temperature measurement system according to the present embodiment.
[Fig. 10] Fig. 10 is an enlarged view illustrating a lower portion of a door of the rack used in the present embodiment.
[Fig. 11] Fig. 11 is a side view for the case where the optical fiber wiring sheet is fixed to the side surface of the server rack in the present embodiment.
[Fig. 12] Fig. 12 is a perspective view for the case where the optical fiber wiring sheet is fixed to an inner surface of the server rack in the present embodiment.
[Fig. 13] Fig. 13 is an enlarged cross-sectional view of the optical fiber wiring sheet according to the present embodiment and the server rack.
[Fig. 14] Fig. 14 is a schematic diagram of a temperature measurement system according to the present embodiment in which a plurality of optical fiber wiring sheets are respectively provided on a plurality of server racks.
[Fig. 15] Fig. 15 is a plan view for the case where an extension portion of an optical fiber is laid on an upper surface of each server rack in the present embodiment.
[Fig. 16] Fig. 16(a) is a plan view of a storage tool used in the present embodiment, and Fig. 16(b) is a cross-sectional view taken along line I-I of Fig. 16(a).
[Fig. 17] Fig. 17 is a plan view illustrating a method of storing the optical fiber wiring sheet in the storage tool in the present embodiment.
[Fig. 18] Fig. 18 is a cross-sectional view illustrating a method of storing the optical fiber wiring sheet in the storage tool in the present embodiment.
[Fig. 19] Fig. 19 is a plan view of a case, a film, and the optical fiber wiring sheet in a folded state according to the present embodiment.
[Fig. 20] Figs. 20(a) and 20(b) are plan views (part 1) illustrating examples of the laying pattern of the optical fiber in the present embodiment.
[Fig. 21] Fig. 21(a) and 21(b) are plan views (part 2) illustrating examples of the laying pattern of the optical fiber in the present embodiment.

## MODES FOR CARRYING OUT THE INVENTION

Hereinafter, embodiments will be described with reference to the accompanying drawings.

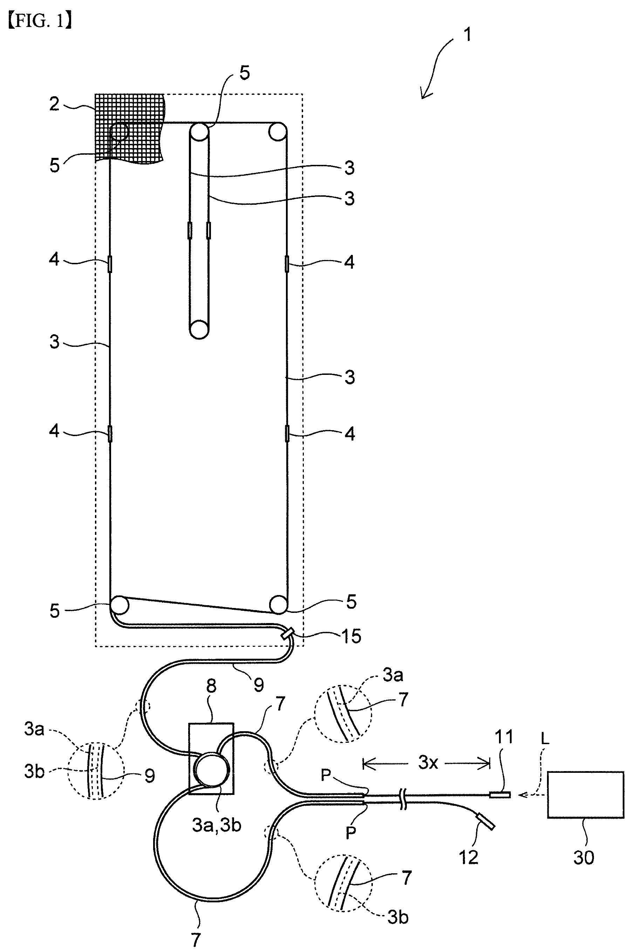

Fig. 1 is a plan view of an optical fiber wiring sheet 1 according to the present embodiment.

This optical fiber wiring sheet 1 is used to measure a temperature distribution in a data center or the like, and includes a sheet 2 having air permeability and an optical fiber 3 laid on the sheet 2.

The sheet 2 is made of flexible resin, and can be folded into a compact form for storage. An example of such a sheet 2 is a net made of polyolefin. The mesh pitch of the net is preferably as large as the air permeability can be ensured. In the present embodiment, the mesh pitch of the sheet 2 is set to approximately 10 mm. Moreover, the mesh line width of the sheet 2 is approximately 2 mm, and the thickness of the sheet 2 is approximately 1 mm.

Further, the size of the sheet 2 is not particularly limited, but the sheet 2 is preferably fabricated to have a size appropriate for a server rack subject to temperature measurement. In the present embodiment, the sheet 2 is used which has a rectangular shape with short sides of approximately 490 mm and long sides of 1500 mm.

It should be noted that the sheet 2 is one example of a sheet-shaped mesh member.

Meanwhile, the optical fiber 3 is a GI (Graded Index) optical fiber, and has an optical input terminal 11 and an optical output terminal 12 at light source-side ends thereof. As the optical fiber 3, for example, HFR-2Z manufactured by Furukawa Electric Co., Ltd. can be employed.

A temperature measurement device 30 is optically connected to the optical input terminal 11 of the above-described optical fiber 3, and a temperature distribution along the optical fiber 3 is measured by the temperature measurement device 30.

Moreover, an extension portion 3x of the optical fiber 3 extended to the outside of the sheet 2 is connected to each of the optical input terminal 11 and the optical output terminal 12. The extension portions 3x are used to measure a temperature in a region outside the sheet 2. In the present embodiment, the extension portions 3x are provided to have a length of approximately 5000 mm.

It should be noted that in order to prevent the extension portions 3x of the optical fiber 3 from being scratched by mechanical impact or the like, the surfaces of the extension portions 3x are preferably covered with resin.

The extension portions 3x extend from the above-described optical input and output terminals 11 and 12 to fusion points P.

The fusion points P are points at which in the optical fiber 3, a first portion 3a close to the optical input terminal 11 and a second portion 3b close to the optical output terminal 12 are fused to the above-described extension portions 3x. Further, each of the first portion 3a and the second portion 3b is passed through a first corrugated tube 7 having an inside diameter of approximately 3 mm and led to a cassette 8.

It should be noted that the first portion 3a is one example of an optical fiber portion of the optical fiber 3 to which an optical signal is inputted. Moreover, the second portion 3b is one example of an optical fiber portion of the optical fiber 3 from which an optical signal is outputted.

A space for housing the first portion 3a and the second portion 3b of the optical fiber 3 is provided in the cassette 8. The first portion 3a and the second portion 3b are wound in the shape of a ring in the cassette 8 and then passed through a second corrugated tube 9 having an inside diameter of approximately 3 mm.

It should be noted that the second corrugated tube 9 is one example of a binder for binding the portions 3a and 3b, and extends from the cassette 8 to the sheet 2.

Moreover, a fastening member 15 for fastening the second corrugated tube 9 is provided on the sheet 2. The fastening member 15 is attachable to and detachable from the sheet 2, and the corrugated tube 9 can be fastened to the sheet 2 in a state in which the corrugated tube 9 is located close to a right or left edge of the rectangular shape of the sheet 2, by a worker changing the position of the fastening member 15 on the sheet 2.

It should be noted that in the present embodiment, a strip-shaped MAGIC TAPE (registered trademark) is used as the fastening member 15, and the MAGIC TAPE is passed through the mesh of the sheet 2 to fasten the corrugated tube 9 to the sheet 2.

The optical fiber 3 protruding from the second corrugated tube 9 is laid on the sheet 2 in a predetermined pattern forming a single unbroken path. The pattern is not particularly limited. In the present embodiment, the optical fiber 3 is laid along the edges of the rectangular sheet 2 to prevent a region in which a temperature is not measured from occurring on the sheet 2.

Moreover, tubes 4 and ring-shaped hooks 5 are provided on the sheet 2. Both of the tubes 4 and the hooks 5 are examples of fasteners, and are provided to fix the optical fiber 3 to the predetermined positions on the sheet 2.

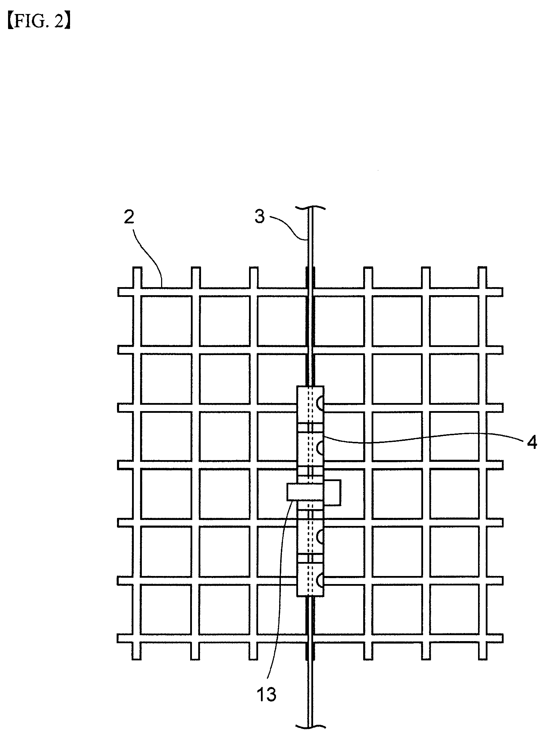

Fig. 2 is an enlarged plan view of the tube 4 and its neighborhoods.

As illustrated in Fig. 2, a plurality of slits is provided in the tube 4, and the tube 4 is fixed to the sheet 2 with a banding band 13. By passing the optical fiber 3 through the tube 4, the shape of the optical fiber 3 in the vicinity of the tube 4 is kept in straight.

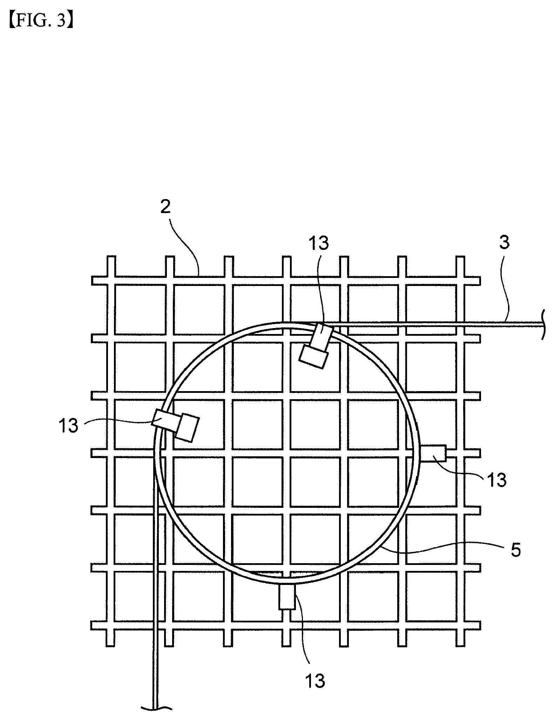

Fig. 3 is an enlarged plan view of the hook 5 and its neighborhoods

As illustrated in Fig. 3, the hook 5 is also fixed to the sheet 2 with banding bands 13. The hook 5 is used to change the extending direction of the optical fiber 3. In the present embodiment, the hooks 5 are provided at four corners of the rectangular sheet 2. Moreover, the optical fiber 3 is wound around the hook 5 a plurality of times.

An optical signal L for measuring a temperature is inputted to the optical fiber 3 from the temperature measurement device 30 illustrated in Fig. 1.

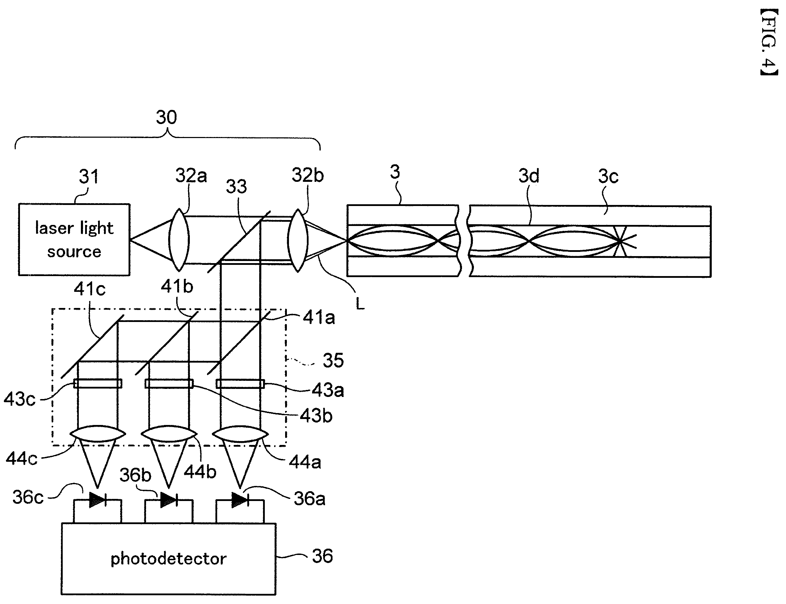

Fig. 4 is a diagram illustrating the configuration of the temperature measurement device 30.

As illustrated in Fig. 4, the temperature measurement device 30 includes a laser light source 31, a collimator lens 32a, a condenser lens 32b, a beam splitter 33, a wavelength separation portion 35, and a photodetector 36.

The laser light source 31 outputs laser light having a predetermined pulse width as the above-described optical signal L at regular intervals. This laser light enters the above-described optical fiber 3 through the collimator lens 32a, the beam splitter 33, and the condenser lens 32b.

Note that the optical fiber 3 includes a core 3d and a cladding 3c formed around the core 3d.

A part of the laser light entering the optical fiber 3 is backscattered by material molecules of the core 3d.

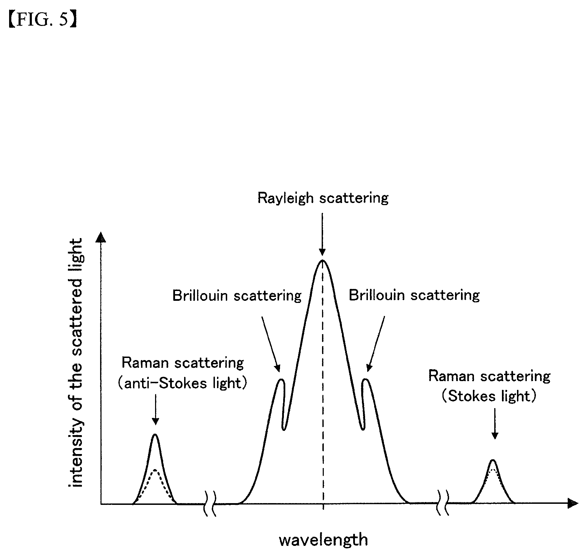

Fig. 5 is a view illustrating a spectrum of the backscattered light.

As illustrated in Fig. 5, the backscattered light includes Rayleigh scattered light, Brillouin scattered light, and Raman scattered light. The Rayleigh scattered light has the same wavelength as the incident light. The Brillouin scattered light and the Raman scattered light have wavelengths shifted from the incident wavelength.

The Raman scattered light includes Stokes light shifted to longer wavelengths relative to the wavelength of the incident light and anti-Stokes light shifted to shorter wavelengths relative to the wavelength of the incident light. Although the amounts of shifting of the Stokes light and the anti-Stokes light depend on wavelength of the laser light, the material of the core 3d and the like, the amounts of shifting are approximately 50 nm in the present embodiment.

Moreover, though both of the intensities of the Stokes light and the anti-Stokes light change in accordance with temperature, the Stokes light changes with temperature by a small amount, and the anti-Stokes light changes with temperature by a large amount. In other words, it can be said that the Stokes light has a weak dependence on temperature, and that the anti-Stokes light has a strong dependence on temperature.

These backscattered lights go back through the optical fiber 3 of Fig. 4, passes through the condenser lens 32b, and is then reflected by the beam splitter 33 to enter the wavelength separation portion 35.

The wavelength separation portion 35 includes first to third beam splitters 41a to 41c which transmit or reflect light, depending on the wavelength, and first to third optical filters 43a to 43c which transmit only light having a specific wavelength. The wavelength separation portion 25 further includes first to third condenser lenses 44a to 44c for concentrating the light, which passed through the above-described first to third optical filters 43a to 43c, on the first to third light receiving portions 36a to 36c of the photodetector 36.

Light entering the wavelength separation portion 35 is separated into Rayleigh scattered light, Stokes light, and anti-Stokes light by the first to third beam splitters 41a to 41c and the optical filters 43a to 43c, and inputted to the first to third light receiving portions 36a to 36c.

As a result, the first to third light receiving portions 36a to 36c output signals in accordance with the intensities of the Rayleigh scattered light, the Stokes light, and the anti-Stokes light.

Noted that the pulse width of the backscattered light inputted to the photodetector 36 is related to the length of the optical fiber 3. Accordingly, the interval between laser pulses outputted from the laser light source 31 is set such that backscattered light of a laser pulse is not superposed on that of another laser pulse. Moreover, in the case where the power of the laser light is too high, stimulated Raman scattering occurs, which makes it difficult to conduct the correct measurement. Thus, the power of the laser light source 31 is preferably controlled so that stimulated Raman scattering does not occur.

As described above, the Stokes light has a weak dependence on temperature, and the anti-Stokes light has a strong dependence on temperature. Accordingly, the temperature at a position at which backscattering occurred can be evaluated using the ratio between the intensities of the Stokes light and the anti-Stokes light.

The intensity ratio between the Stokes light and the anti-Stokes light is expressed by the following expression (1), where $\omega_0$ is the angular frequency of the incident light, $\omega_k$ is the angular frequency of an optical phonon in the optical fiber, h is Planck's constant, k is Boltzmann constant, and T is the temperature:

[Expression 1]

$$\frac{I_s^{anti-stokes}}{I_s^{stokes}} = \left( \frac{\omega_0 + \omega_k}{\omega_0 - \omega_k} \right)^4 \exp\left( \frac{-h\omega_k}{2\pi kT} \right) \qquad \cdots (1)$$

Accordingly, when the intensity ratio between the Stokes light and the anti-Stokes light is known, the temperature at a position at which backscattering occurred can be calculated from the expression (1).

Meanwhile, Backscattered light produced in the optical fiber 3 is attenuated while passing back through the optical fiber 3. Accordingly, in order to correctly evaluate the temperature at a position at which backscattering occurs, it is preferable to take the attenuation of light into consideration.

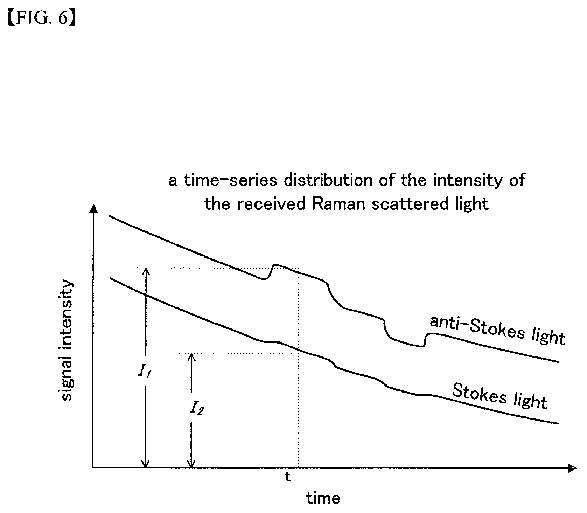

Fig. 6 is a view illustrating one example of a time-series distribution of the intensity of Raman scattered light, where the horizontal axis represents time, and the vertical axis represents the intensity of a signal outputted from the light receiving portion of the photodetector. During a certain period of time immediately after a laser pulse is launched into the optical fiber 3, Stokes light and anti-Stokes light are detected in the photodetector 36. In the case where the temperature is uniform throughout the entire length of the optical fiber 3, the signal intensity decreases with time with reference to the time at which the laser pulse enters the optical fiber 3. In this case, time represented by the horizontal axis is the distance from the light source-side ends of the optical fiber 3 to a position at which backscattering has occurred, and the decrease in the signal intensity with time indicates the attenuation of light by the optical fiber 3.

In the case where the temperature is not uniform along the length direction of the optical fiber 3, e.g., the case where a high temperature portion and a low temperature portion exist along the length direction, the signal intensities of Stokes light and anti-Stokes light are not uniformly attenuated.

In the case where a low temperature portion and a high temperature portion exist in this manner, a crest and a trough appear in a graph as illustrated in Fig. 6. In Fig. 6, at a certain time t, the intensity of anti-Stokes light is denoted by $I_1$, and the intensity of Stokes light is denoted by $I_2$.

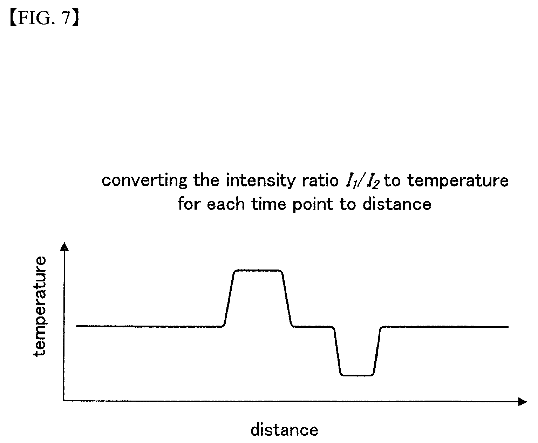

Fig. 7 is a view illustrating a result of calculating the ratio $I_1/I_2$ for each time point based on the time-series distribution of the intensity of Raman scattered light of Fig. 6, converting the horizontal axis (time) of Fig. 6 to distance, and converting the vertical axis (signal intensity) to temperature. As illustrated in Fig. 7, a temperature distribution of the optical fiber 3 along its length direction can be measured by calculating the intensity ratio ($I_1/I_2$) between anti-Stokes light and Stokes light.

Note that the intensity of Raman scattered light (Stokes light and anti-Stokes light) at a position at which backscattering occurred changes with temperature, but the temperature dependence of the intensity of Rayleigh scattered light is negligibly small. Accordingly, it is preferable that a position at which backscattering occurred is identified based on the intensity of Rayleigh scattered light so as to correct the intensities of Stokes light and anti-Stokes light detected by the photodetector in accordance with the identified position.

Next, a description will be made of a temperature measurement system using the above-described optical fiber wiring sheet 1 and the temperature measurement device 30.

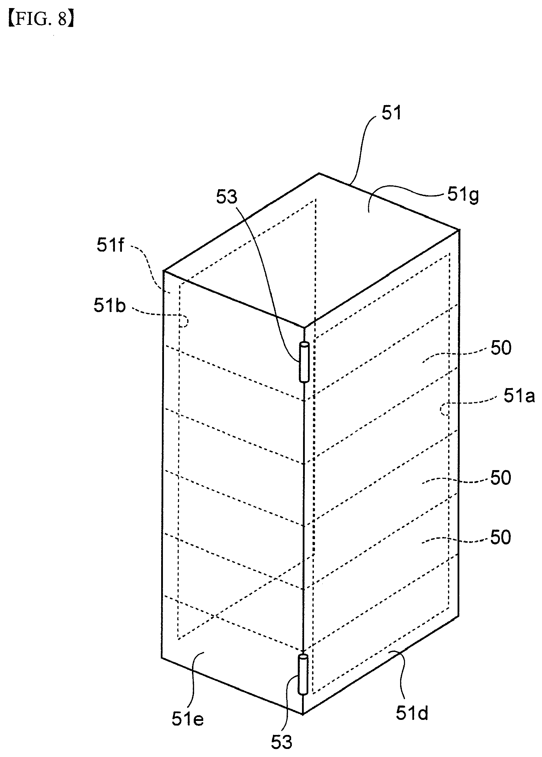

Fig. 8 is a perspective view of a server rack 51 subject to temperature measurement. The server rack 51 is one example of a casing of the system, and houses a plurality of electronic devices 50 including a heat generating body such as a server.

The server rack 51 has a door 51d, side surfaces 51e, a back surface 51f, and an upper surface 51g. Of these, each of the door 51d and the back surface 51f is provided with intake port 51a and exhaust port 51b. Each electronic device 50 takes in air for air cooling through the intake port 51a, and an exhaust flow warmed due to each electronic device 50 being cooled is discharged through the exhaust port 51b.

Moreover, the door 51d can swing open and closed about opening and closing shafts 53. Opening the door 51d allows a worker to perform maintenance on each electronic device 50.

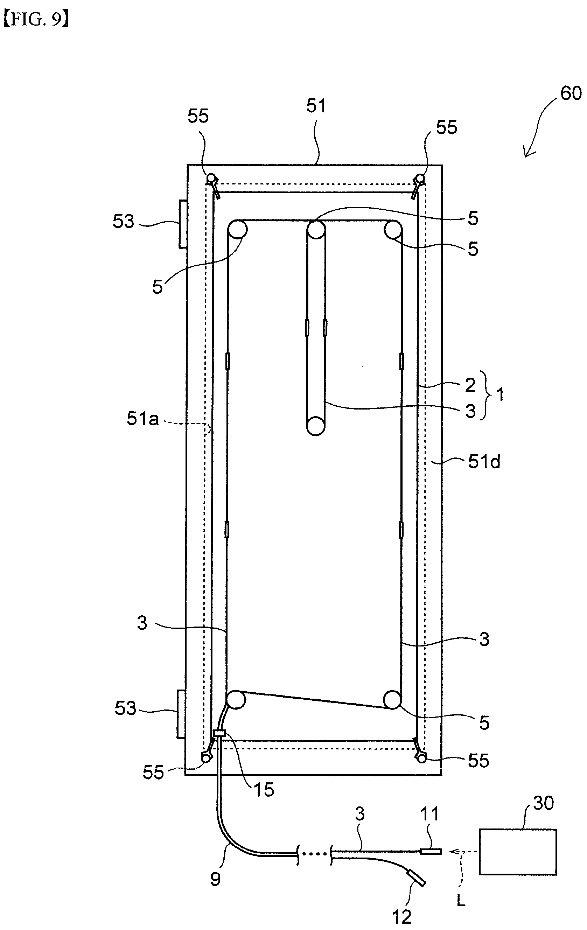

Fig. 9 is a schematic diagram of the temperature measurement system according to the present embodiment.

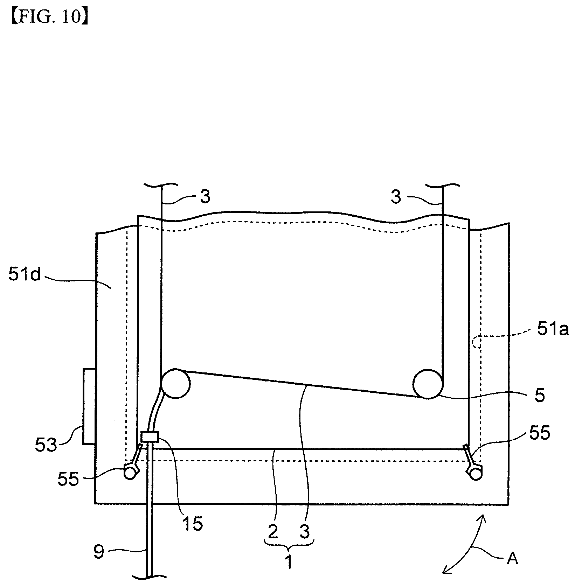

Note that in Fig. 9, the same components as described in Figs. 1 and 8 will be denoted by the same reference numerals as those in these drawings, and their explanations will be omitted. This is also the case for Figs. 10 to 21 described below.

The temperature measurement system 60 illustrated in Fig. 9 includes the above-described optical fiber wiring sheet 1, the temperature measurement device 30, and the server rack 51.

In this example, the optical fiber wiring sheet 1 is fixed to the door 51d of the server rack 51 to measure the temperature of air taken in through the intake port 51a with the temperature measurement device 30 using the optical fiber wiring sheet 1.

A method of fixing the optical fiber wiring sheet 1 is not particularly limited. For example, the optical fiber wiring sheet 1 can be fixed to the door 51d by providing hooks 55 on the door 51d and passing the hooks through four corners of the sheet 2.

In the present embodiment, the optical fiber 3 is laid on the optical fiber wiring sheet 1 in a predetermined pattern in advance. Accordingly, a worker does not need to lay the optical fiber 3 on the server rack 51 on site, and working time can be greatly reduced to reduce the load on the worker.

Moreover, even in the case where there occurs a trouble such as a break in the optical fiber 3 during the use of the optical fiber wiring sheet 1, temperature measurement can be restarted only by replacing the optical fiber wiring sheet 1. This is very convenient.

Further, since the sheet 2 has air permeability, heat is less likely to be trapped between the sheet 2 and the server rack 51, therefore temperature measurement using the optical fiber 3 becomes accurate.

In particular, in this example, air taken in through the intake port 51a can pass through the sheet 2 having air permeability. Accordingly, the temperature of air flowing through the intake port 51a can be measured without impeding the air-cooling of each electronic device 50 (see Fig. 8).

Note that in the case where the optical fiber 3 is wound around the ring-shaped hook 5 a plurality of times as in this example, a plurality of temperature measurement points may be set in a portion of the optical fiber 3 which is wound around the hook 5, so as to be superposed on each other. In this case, when the temperature measurement device 30 calculates the average of temperatures at the plurality of temperature measurement points, the accuracy of temperature measurement on the hook 5 is improved as compared to that for the case where only a single temperature measurement point is provided on the hook 5.

Fig. 10 is an enlarged view of a lower portion of the door 51d.

As described above, the attachable and detachable fastening member 15 is provided on the sheet 2. In the case where the optical fiber wiring sheet 1 is provided on the door 51d as in this example, the fastening member 15 is preferably provided on the side of the opening and closing shafts 53 so that the corrugated tube 9 may be located close to the opening and closing shafts 53.

This reduces the movement of the corrugated tube 9 when a worker opens or closes the door 51d along arrow A, and can prevent the corrugated 9 from interfering with an operation such as maintenance.

Note also that though the optical fiber wiring sheet 1 is provided on the intake port 51a in the example illustrated in Figs. 9 and 10, the optical fiber wiring sheet 1 may be provided on the exhaust port 51b to measure the temperature of an exhaust flow outgoing from the exhaust port 51b.

Moreover, in the server rack 51, a surface to which the optical fiber wiring sheet 1 is fixed is not limited to the above.

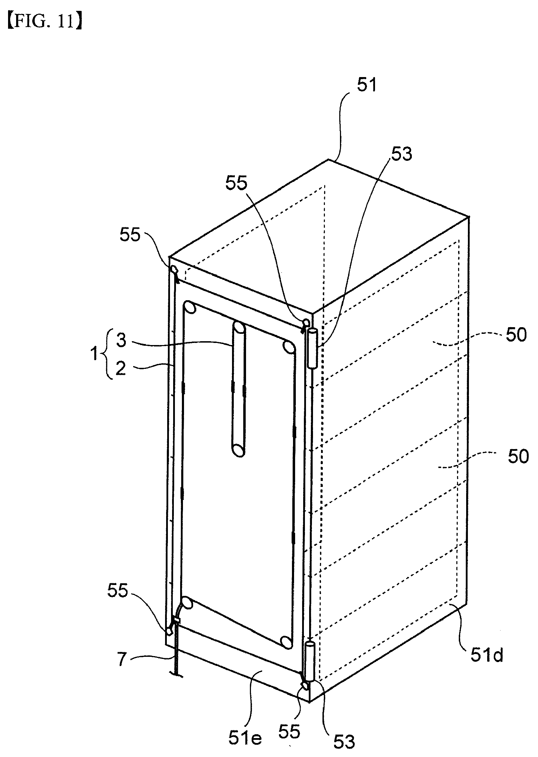

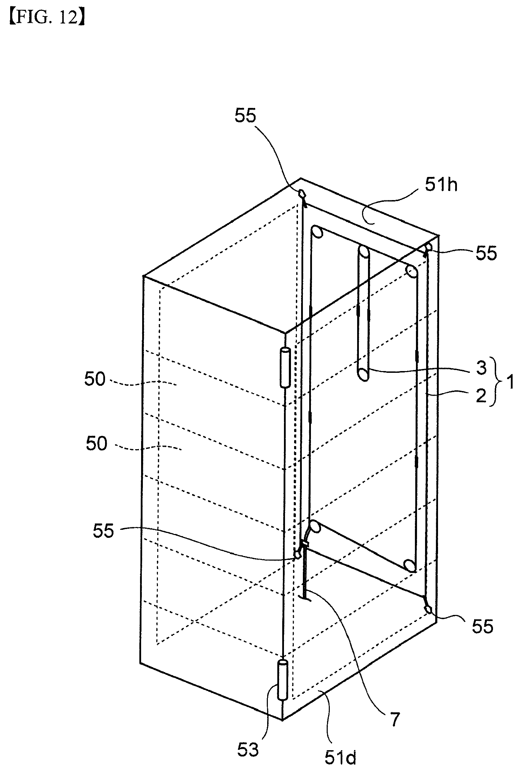

Fig. 11 is a side view for the case where the optical fiber wiring sheet 1 is fixed to the side surface 51e of the server rack 51. Moreover, Fig. 12 is a perspective view for the case where the optical fiber wiring sheet 1 is fixed to an inner surface 51h which is an inner surface of the server rack 51.

As in Figs. 11 and 12, temperature on the side surface 51e or the inner surface 51h may be measured using the optical fiber wiring sheet 1.

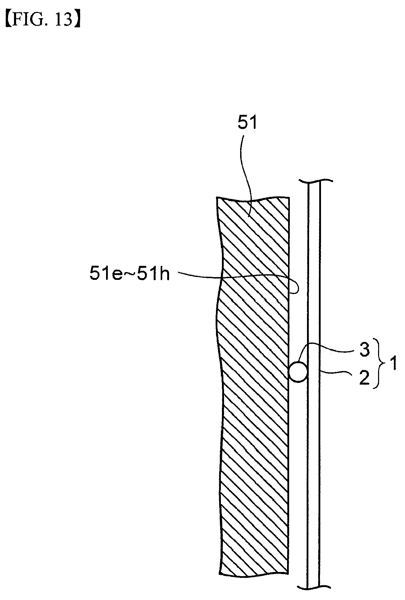

Fig. 13 is an enlarged cross-sectional view of the optical fiber wiring sheet 1 and the server rack 51.

In the example of Fig. 13, the optical fiber 3 is provided between each of the surfaces 51e to 51h of the server rack 51 and the sheet 2, so that the optical fiber 3 faces each of the surfaces 51e to 51h. Thus, an external impact on the optical fiber 3 is absorbed by the sheet 2. Accordingly, the optical fiber 3 can be prevented from being damaged by an impact.

Further, since the optical fiber 3 is located close to the server rack 51, temperature on each of the above-described surfaces 51e to 51g can also be accurately measured using the optical fiber 3.

Moreover, in the above description, the case where a single optical fiber wiring sheet 1 is used is described as an example, but a plurality of optical fiber wiring sheets 1 may be used.

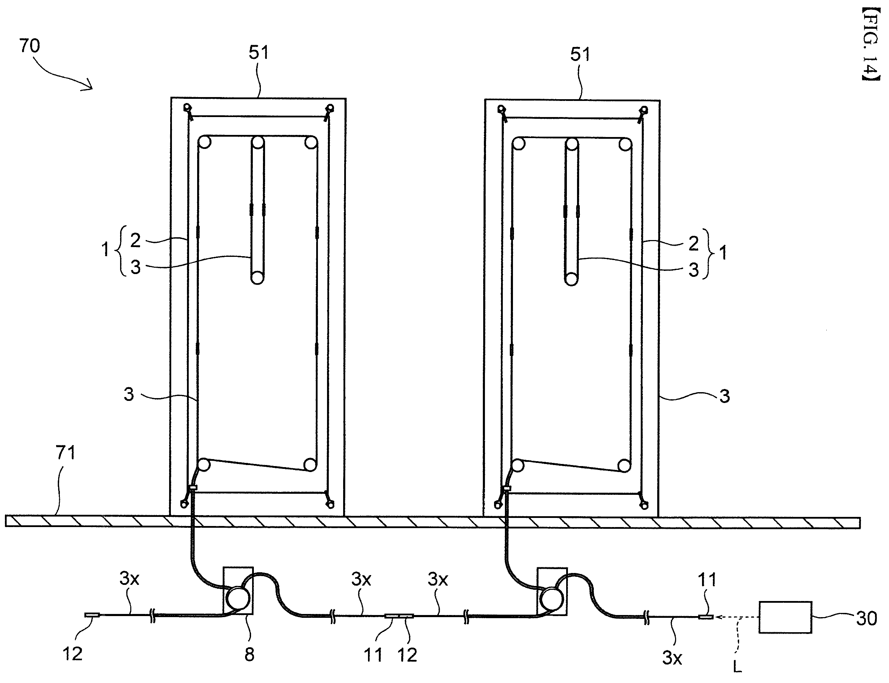

Fig. 14 is a schematic diagram of a temperature measurement system 70 in which a plurality of the optical fiber wiring sheets 1 are respectively provided on a plurality of the server racks 51.

In this example, a plurality of server racks 51 are provided on a floor 71 of a data center or the like, and the optical fiber wiring sheets 1 are respectively fixed to the server racks 51. Further, the input terminal 11 of the optical fiber 3 of one optical fiber wiring sheet 1 and the optical output terminal 12 of the optical fiber 3 of another optical fiber wiring sheet 1 are connected so that the optical fibers 3 may be laid in a pattern of a single unbroken path. Thus, the optical input terminal 11 and the optical output terminal 12 are served as connecting portions for connecting a portion of the optical fiber 3 of each sheet 2 to which an optical signal is inputted and a portion thereof from which the optical signal is outputted.

By inputting an optical signal L from the temperature measurement device 30 to the optical fiber 3 in this state, temperatures on the plurality of server racks 51 can be measured by the temperature measurement device 30.

Note that the extension portions 3x of the optical fiber 3 are provided for each optical fiber wiring sheet 1 as illustrated in Fig. 1. By laying the extension portions 3x in predetermined shapes in regions which cannot be covered by the optical fiber wiring sheet 1 as described below, a temperature distribution can be measured for positions where the extension portions 3x are located.

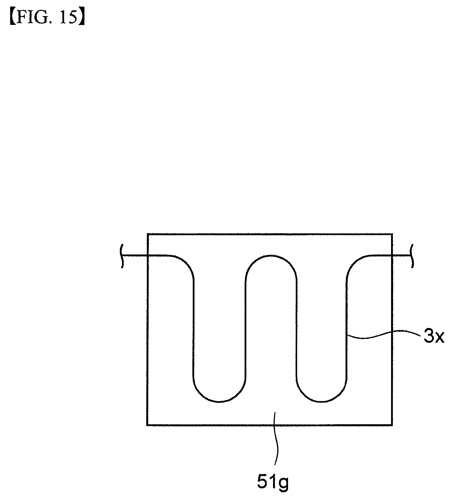

Fig. 15 is a plan view for the case where the extension portion 3x of the optical fiber 3 is laid on the upper surface 51g of each server rack 51.

Thus, a temperature distribution on the upper surface 51g can also be measured with the temperature measurement portion 30, and a temperature measurement region can be widened.

Next, a method of storing the above-described optical fiber wiring sheet 1 will be described.

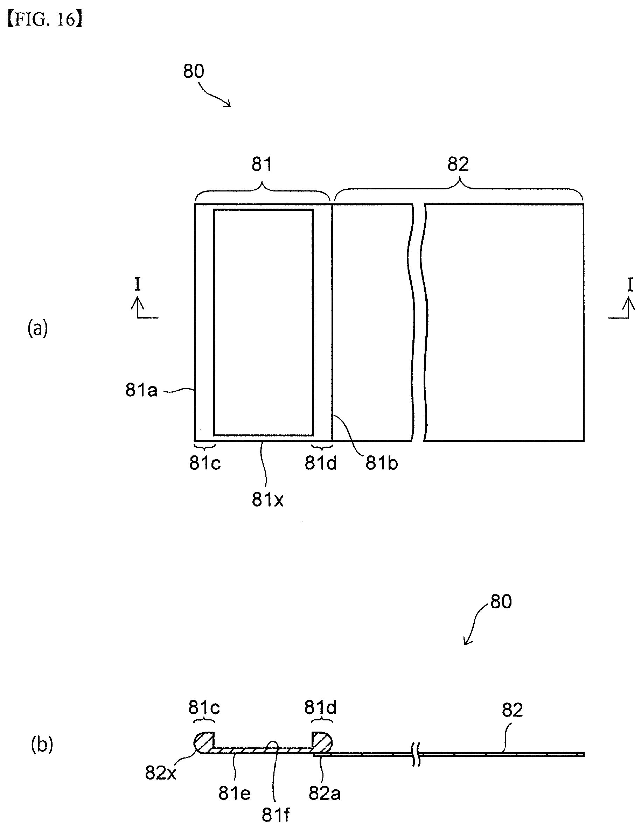

Fig. 16(a) is a plan view of a storage tool 80 used for storage, and Fig. 16(b) is a cross-sectional view taken along line I-I of Fig. 16(a).

As illustrated in Fig. 16(a), the storage tool 80 includes a case 81 and a film 82. The case 81 is made of resin such as vinyl chloride, and a peripheral surface 81x thereof has a first side 81a and a second side 81b which are parallel to each other in planar view.

Moreover, as illustrated in Fig. 16(b), the case 81 has two side portions 81c and 81d and a bottom portion 81e, and these portions form a recessed portion 81f.

Moreover, the peripheral surface 81x of the case 81 is rounded in both of the side portions 81c and 81d and is a plane surface in the bottom portion 81x.

Meanwhile, the film 82 is a flexible film made of resin such as vinyl, and one end 82a thereof is fixed to the bottom portion 81e of the case 81.

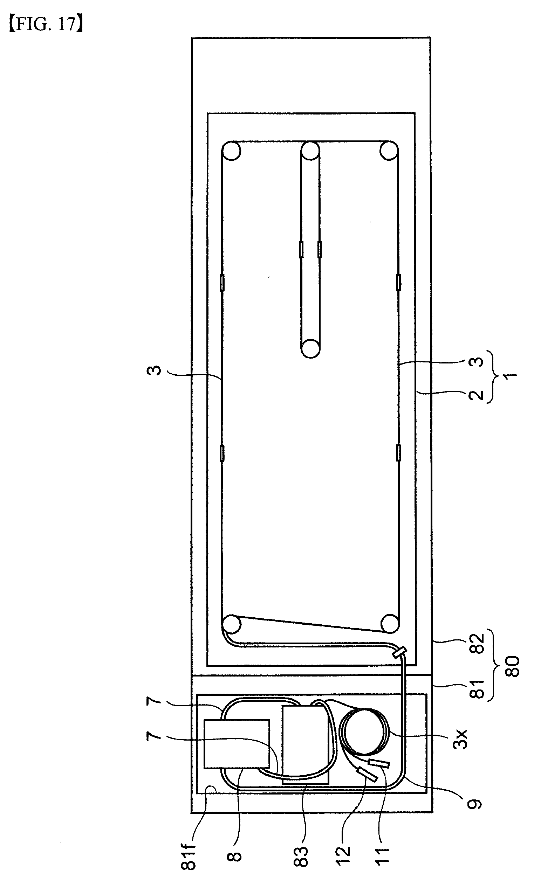

Fig. 17 is a plan view illustrating a method of storing the optical fiber wiring sheet 1 in the storage tool 80.

When storing, the extension portions 3x, the cassette 8, the optical input terminal 11, and the optical output terminal 12 are stored in the recessed portion 81f of the case 81.

It should be noted that since the strength of the optical fiber 3 is low at the fusion point P (see Fig. 1), it is preferable to store the optical fiber 3 at the fusion point P and its neighborhoods in the box 83, and store the box 83 in the case 81.

Then, the sheet 2 is placed on the film 82. Since the film 82 plays a role to protect the sheet 2, it is preferable to use the film 82 larger than the sheet 2 in planar view so that the sheet 2 may not protrude from the film 82.

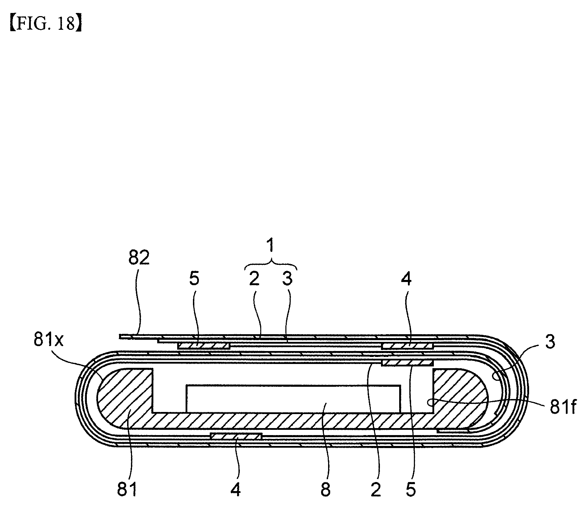

Subsequently, as illustrated in a cross-sectional view of Fig. 18, the film 82 is folded along the peripheral surface 81x of the case 81 with the sheet 2 being on the inner side of the film 82.

This allows the optical fiber wiring sheet 1 to be stored into a compact form with the optical fiber 3 being protected by the film 82, and allows a worker to easily carry the optical fiber wiring sheet 1.

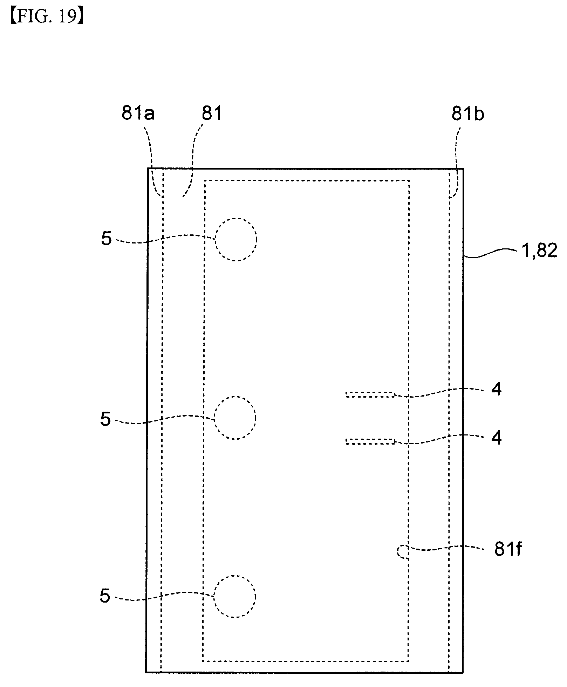

Fig. 19 is a plan view of the case 81, the film 82, and the optical fiber wiring sheet 1 in the folded state.

As illustrated in Fig. 19, the first side 81a and the second side 81b of the above-described case 81 serve as reference lines for folding. The optical fiber wiring sheet 1 and the film 82 can be folded along these sides 81a and 81b.

When a fastener such as the tube 4 or the hook 5 is superposed on the first side 81a or the second side 81b in this state, a folding force acts on the tube 4 or the hook 5, and these fasteners may be damaged. Moreover, these fasteners may interfere with the folding of the optical fiber wiring sheet 1.

To deal with this problem, in the present embodiment, as illustrated in Fig. 19, the positions of these fasteners on the optical fiber wiring sheet 1 are adjusted so that the tubes 4 and the hooks 5 may be located between the two sides 81a and 81b in a state in which the optical fiber wiring sheet 1 is folded. This can reduce damage suffered by the tubes 4 and the hooks 5 at the time of folding, and can prevent the tubes 4 and the hooks 5 from interfering with the folding of the optical fiber wiring sheet 1.

While the present embodiment has been described in detail in the above, the present embodiment is not limited to the above.

For example, as the laying pattern of the optical fiber 3 in the optical fiber wiring sheet 1, the following patterns may be employed other than the example illustrated in Fig. 1.

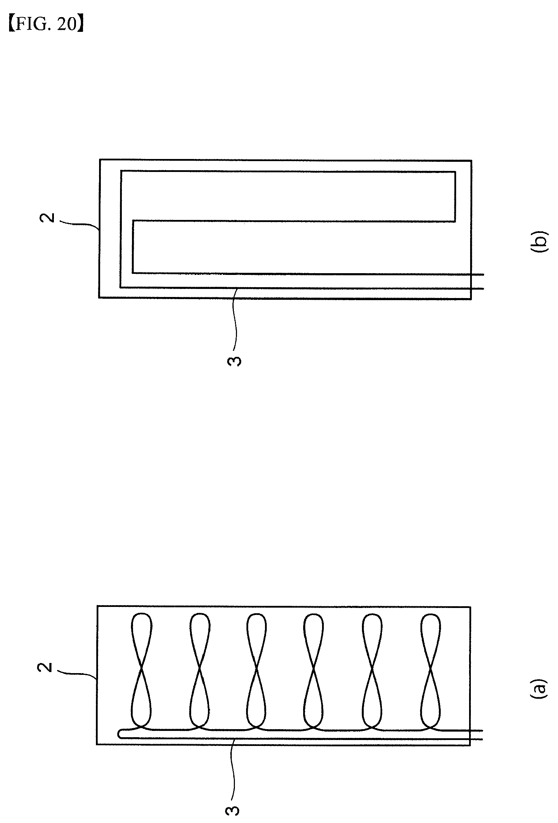

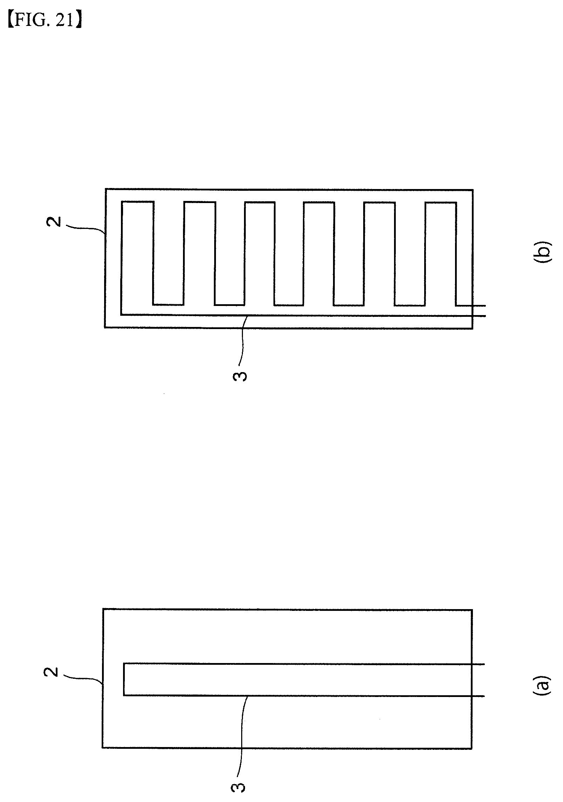

Figs. 20 and 21 are plan views illustrating examples of the laying pattern of the optical fiber 3.

In the example of Fig. 20(a), a plurality of loops like a figure of 8, which lean towards the short side of the sheet 2, is provided in the optical fiber 8.

In the example of Fig. 20(b), the optical fiber 3 travels back and forth a plurality of times between the two short sides of the sheet 2.

In the example of Fig. 21(a), the optical fiber 3 is located close to the center of the sheet 2, and the optical fiber 3 travels back and forth once between an upper side and a lower side of the sheet 2.

Further, in the example of Fig. 21(b), the optical fiber 3 travels back and forth a plurality of times between the two long sides of the sheet 2.

In any of the patterns illustrated in Figs. 20 and 21, the optical fiber 3 is laid on the sheet 2 to form a single unbroken path, and temperature can be measured along the length direction of the optical fiber 3 using the temperature measurement device 30.

**Preferred Embodiments**

1. An optical fiber wiring sheet comprising:

a sheet having air permeability; and
an optical fiber laid on a surface of the sheet, the optical fiber having two ends, one of which is provided with an optical input terminal, and the other of which is provided with an optical output terminal.

2. The optical fiber wiring sheet according to point 1, wherein the optical fiber comprises a first portion close to the optical input terminal and a second portion close to the optical output terminal, and
the optical fiber wiring sheet further comprises:

a binder which binds the first portion and the second portion together; and
a fastening member which keeps the binder close to an edge of the sheet.

3. The optical fiber wiring sheet according to point 2, wherein the fastening member is attachable to and detachable from the sheet.

4. The optical fiber wiring sheet according to any one of points 1 to 3, wherein the optical fiber is laid along an edge of the sheet.

5. The optical fiber wiring sheet according to any one of points 1 to 4, further comprising:

a case in which the optical input terminal and the optical output terminal are stored; and
a film which is fixed to the case, and on which the sheet is placed,

wherein the film is foldable along a peripheral surface of the case with the sheet being on an inner side of the film.

6. The optical fiber wiring sheet according to point 5, further comprising:

a fastener which fixes the optical fiber to the sheet,

wherein the peripheral surface of the case comprises a first side and a second side parallel to each other in planar view, the first and second sides serving as reference lines for folding the film, and
the fastener is located between the first side and the second side in planar view in a state where the film is folded.

7. The optical fiber wiring sheet according to point 6,
wherein the fastener is a ring-shaped hook, and
the optical fiber is wound in a ring shape around the hook.

8. The optical fiber wiring sheet according to any one of points 1 to 7, comprising a plurality of the sheets and a plurality of the optical fibers,
wherein the input terminal of the optical fiber of one of the sheets and the output terminal of the optical fiber of another one of the sheets are connected to each other.

9. A temperature measurement system comprising:

a casing in which an electronic device is housed;
a sheet provided on a surface of the casing;
an optical fiber laid on a surface of the sheet, the optical fiber having two ends, one of which is provided with an optical input terminal and the other of which is provided with an optical output terminal; and
a temperature measurement device which measures a temperature distribution along a length direction of the optical fiber by supplying an optical signal to the optical input terminal and receiving the optical signal backscattered in the optical fiber.

10. The temperature measurement system according to point 9, wherein the optical fiber is provided between the surface of the casing and the sheet.

11. The temperature measurement system according to any one of points 9 and 10,
wherein an intake port and an exhaust port are provided in the casing, and
the sheet and the optical fiber are provided on at least one of the intake port and the exhaust port.

12. The temperature measurement system according to any one of points 9 and 10,
wherein the optical fiber comprises an extension portion extended to an outside of the sheet, and

the temperature measurement device measures a temperature distribution in the extension portion.

13. The temperature measurement system according to point 12,
wherein the casing comprises an upper surface, and
the extension portion is laid on the upper surface.

14. A temperature measurement method comprising:

fixing a sheet on a surface of a casing in which an electronic device is housed, where an optical fiber including an optical input terminal and an optical output terminal being laid on the sheet; and
measuring a temperature distribution along a length direction of the optical fiber by supplying an optical signal to the optical input terminal and receiving the optical signal backscattered in the optical fiber.

15. The temperature measurement method according to point 14,
wherein the casing includes a door capable of open and closed about an opening and closing shaft,
the sheet is fixed to the door when the sheet is fixed to the casing,
a first portion and a second portion of the optical fiber are bound with a binder, the first portion being close to the optical input terminal, the second portion being close to the optical output terminal, and the binder is made close to the opening and closing shaft of the door.

16. The temperature measurement method according to any one of points 14 and 15, further comprising:

housing the optical input terminal and the optical output terminal in a case;
placing the sheet on a film fixed to the case, and folding the film along a peripheral surface of the case with the sheet being on an inner side of the film.

17. An optical fiber wiring sheet comprising:

a sheet-shaped mesh member; and
an optical fiber disposed in a predetermined wiring pattern on the sheet-shaped mesh member and attached to the sheet-shaped mesh member,

wherein the optical fiber comprises a lead portion led out to an outside of the sheet-shaped mesh member, and the lead portion comprises an optical fiber portion through which an optical signal is inputted to the optical fiber disposed on the sheet-shaped mesh member, and an optical fiber portion through which the optical signal is outputted from the optical fiber disposed on the sheet-shaped mesh member.

18. The optical fiber wiring sheet according to point 1
wherein the sheet-shaped mesh member comprises a fastening member of the optical fiber,
where the lead portion of the optical fiber located close to any one of right and left edges of the sheet-shaped mesh member is made close to the other edge by the fastening member.

19. The optical fiber wiring sheet according to point 1
wherein the optical fiber attached to the sheet-shaped mesh member is fixed to a predetermined position on the sheet with a fastener to maintain a shape of a predetermined wiring pattern.

20. The optical fiber wiring sheet according to point 17, further comprising:

connecting portions which connect an optical fiber portion for outputting an optical signal from an optical fiber disposed on a first optical fiber wiring sheet and an optical fiber portion for inputting an optical signal to an optical fiber disposed on a second optical fiber wiring sheet.

21. A temperature measurement method comprising:

attaching a sheet-shaped mesh member to an inside of a casing of a device including a heat generating body, where an optical fiber is disposed on and attached to the sheet-shaped mesh member in a predetermined wiring pattern; and
measuring a temperature distribution about any one of the device and the casing using the attached optical fiber.

22. The temperature measurement method according to point 21, wherein the sheet-shaped mesh member is attached to the casing such that the optical fiber disposed on the sheet-shaped mesh member faces an inner surface of the casing.

23. A temperature measurement method comprising:

attaching a sheet-shaped mesh member to any one of an intake side and an exhaust side of a casing of a device including a heat generating body, where an optical fiber is disposed on the sheet-shaped mesh member in a predetermined wiring pattern; and
measuring a temperature distribution about any one of the device and the casing using the disposed optical fiber.

24. A temperature measurement method comprising:

attaching a sheet-shaped mesh member to any one of an intake side and an exhaust side of a casing of a device including a heat generating body, where an optical fiber is disposed on the sheet-shaped mesh member in a predetermined wiring pattern;
leading the optical fiber disposed on the attached sheet-shaped mesh member to an outside of the sheet-shaped mesh member, and arranging the optical fiber led to the outside in a predetermined shape; and
measuring a temperature distribution about either the device or the casing, and about a position at which the optical fiber led to the outside and having the predetermined shape, by using the disposed optical fiber.

**Claims**

1. A temperature measurement system comprising:

a casing in which an electronic device is housed;
a sheet provided on a surface of the casing;
an optical fiber laid on a surface of the sheet, the optical fiber having two ends, one of which is provided with an optical input terminal and the other of which is provided with an optical output terminal; and
a temperature measurement device which measures a temperature distribution along a length direction of the optical fiber by supplying an optical signal to the optical input terminal and receiving the optical signal backscattered in the optical fiber.

2. The temperature measurement system according to claim 1, wherein the optical fiber is provided between the surface of the casing and the sheet.

3. The temperature measurement system according to any one of claims 1 and 2,
wherein an intake port and an exhaust port are provided in the casing, and
the sheet and the optical fiber are provided on at least one of the intake port and the exhaust port.

4. The temperature measurement system according to any one of claims 1 and 2,
wherein the optical fiber comprises an extension portion extended to an outside of the sheet, and
the temperature measurement device measures a temperature distribution in the extension portion.

5. The temperature measurement system according to claim 4,
wherein the casing comprises an upper surface, and
the extension portion is laid on the upper surface.

6. A temperature measurement method comprising:

fixing a sheet on a surface of a casing in which an electronic device is housed, where an optical fiber including an optical input terminal and an optical output terminal being laid on the sheet; and
measuring a temperature distribution along a length direction of the optical fiber by supplying an optical signal to the optical input terminal and receiving the optical signal backscattered in the optical fiber.

7. The temperature measurement method according to claim 6,
wherein the casing includes a door capable of open and closed about an opening and closing shaft,

the sheet is fixed to the door when the sheet is fixed to the casing,

a first portion and a second portion of the optical fiber are bound with a binder, the first portion being close to the optical input terminal, the second portion being close to the optical output terminal, and the binder is made close to the opening and closing shaft of the door.

8. The temperature measurement method according to any one of claims 6 and 7, further comprising:

housing the optical input terminal and the optical output terminal in a case;

placing the sheet on a film fixed to the case, and folding the film along a peripheral surface of the case with the sheet being on an inner side of the film.

【FIG. 1】

【FIG. 2】

【FIG. 3】

【FIG. 4】

【FIG. 5】

【FIG. 6】

a time-series distribution of the intensity of
the received Raman scattered light

anti-Stokes light

Stokes light

signal intensity

$I_1$

$I_2$

t

time

【FIG. 7】

converting the intensity ratio $I_1/I_2$ to temperature
for each time point to distance

【FIG. 8】

【FIG. 9】

【FIG. 10】

【FIG. 11】

【FIG. 12】

【FIG. 13】

【FIG. 14】

【FIG. 15】

3x

51g

【FIG. 16】

80

81    82

(a)

I    I

81a

81c    81d    81b

81x

80

81c    81d    82

(b)

82x    81e    82a

81f

【FIG. 17】

【FIG. 18】

【FIG. 19】

【FIG. 20】

【FIG. 21】

(b)

(a)

Europäisches
Patentamt
European
Patent Office
Office européen
des brevets

# EUROPEAN SEARCH REPORT

**Application Number**

EP 16 17 8584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/145251 A1 (OGURA MASAKI [JP] ET AL) 28 June 2007 (2007-06-28) * paragraphs [0068] - [0100]; figures 1-6 * | 1-8 | INV. G01K11/32 G01K1/14 |
| Y | US 2002/027944 A1 (HELMIG CHRISTIAN [DE] ET AL) 7 March 2002 (2002-03-07) * paragraphs [0054] - [0057]; figures 3,3a * | 1-8 | |
| A | US 2010/054298 A1 (SASAOKA EISUKE [JP] ET AL) 4 March 2010 (2010-03-04) * paragraphs [0028] - [0035]; figure 1 * | 1-8 | |

| TECHNICAL FIELDS SEARCHED (IPC) |
|---|
| G01K |

The present search report has been drawn up for all claims

| Place of search | Date of completion of the search | Examiner |
|---|---|---|
| The Hague | 7 November 2016 | Franche, Vincent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 8584

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2016

| Patent document cited in search report | | Publication date | Patent family member(s) | | Publication date |
|---|---|---|---|---|---|
| US 2007145251 | A1 | 28-06-2007 | CN 1991314 A | | 04-07-2007 |
| | | | JP 4706475 B2 | | 22-06-2011 |
| | | | JP 2007178349 A | | 12-07-2007 |
| | | | US 2007145251 A1 | | 28-06-2007 |
| US 2002027944 | A1 | 07-03-2002 | DE 10037501 C1 | | 29-11-2001 |
| | | | EP 1178295 A1 | | 06-02-2002 |
| | | | US 2002027944 A1 | | 07-03-2002 |
| US 2010054298 | A1 | 04-03-2010 | CN 101506635 A | | 12-08-2009 |
| | | | EP 2081006 A1 | | 22-07-2009 |
| | | | JP 4775173 B2 | | 21-09-2011 |
| | | | JP 2008051643 A | | 06-03-2008 |
| | | | US 2010054298 A1 | | 04-03-2010 |
| | | | WO 2008023695 A1 | | 28-02-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009265007 A